# EUROPEAN PATENT APPLICATION

(11) **EP 1 780 377 A2**
(43) Date of publication of application: **02.05.2007**
(21) Application number: 06255561.0
(22) Date of filing: 30.10.2006
(51) Int. Cl.: F01D 5/00, B23P 6/00, F01D 5/28

(54) **Method for coating a turbine shroud**

(30) Priority: 31.10.2005 US 163799
(71) Applicant: General Electric Company, Schenectady, NY 12345 (US)
(72) Inventor: Kelly, Thomas Joseph, Cincinnati, Ohio 45241 (US); Dasilva, Paul A., Middletown Ohio 45044 (US)
(74) Representative: Illingworth-Law, William Illingworth

(57) **Abstract**

A method of producing a puck (48) for coating a turbine shroud includes: providing a mixture of a metallic powder and a binder; melting the mixture and forming the mixture into a preform (70) having a shape conforming to the flowpath surface (18) of the shroud; removing a majority of the binder from the preform (70); and heating the preform (70) with microwave energy (86) to remove the remainder of the binder and to sinter the metal powder together to form the puck (48). A turbine shroud may be repaired by bonding the puck (48) to its flowpath surface (18).

## Description

### BACKGROUND OF THE INVENTION

This invention relates generally to sintered metallic components and more particularly to turbine shrouds coated by metal injection molding.

A gas turbine engine includes one or more turbine stages having a plurality of airfoil-shaped blades attached to a rotating disk. The blades extract energy from a stream of heated combustion gases and transfer it to the disk, which is in turn connected to a shaft for powering a fan, compressor, or external load. An annular shroud encircles the tips of the turbine blades to define the outer boundary of the flowpath through each stage. The clearance between the blade tips and the shroud is minimized to prevent the leakage past the tips of the blades and maximize efficiency. The flowpath surface of the shroud is made abradable or "rub-tolerant" so that the tip of the blade can cut into it during operation. This cutting process may be permitted to occur intentionally to allow the blade to form a matched interface with the shroud, or it may simply occur through during engine operation if the provided radial clearance is exceeded.

Over time the flowpath surfaces of the shrouds wear down from blade rubbing, hot gas erosion, and high-temperature corrosion. Because of the high cost of the shroud materials, they are typically repaired by restoring them to their original dimensions. One known method for this restoration is the use of thermally densified coatings (TDC). The TDC process utilizes thin "pucks", made from compressed metallic powders, which are brazed to the shroud. These pucks have a density of approximately 70% which tends to result in distorting or "cupping" of the shroud during cooling from the braze step. In addition, the low-melt braze has a tendency to run excessively. This requires substantial hand blending work and increases the probability of having to scrap the shroud.

Accordingly, there is a need for a method of coating shrouds which produces a dense flowpath surface.

### BRIEF SUMMARY OF THE INVENTION

The above-mentioned need is met by the present invention, which according to one aspect provides a method of producing a puck for coating a turbine shroud, including: providing a mixture of a metallic powder and a binder; melting the binder and forming the mixture into a preform having a preselected shape conforming to a flowpath surface of the shroud; removing a majority of the binder from the preform; and heating the preform to remove the remainder of the binder and to sinter the metal powder together to form the puck.

According to another aspect of the invention, a method of repairing a turbine shroud includes: providing a turbine shroud having a flowpath surface; providing a mixture of a metallic powder and a binder; melting the binder and forming the mixture into a preform having a preselected shape conforming to a flowpath surface of the shroud; removing a majority of the binder from the preform; heating the preform to remove the remainder of the binder and to sinter the metal powder together into a puck; and bonding the preform to the flowpath surface.

### BRIEF DESCRIPTION OF THE DRAWINGS

The invention may be best understood by reference to the following examples taken in conjunction with the accompanying drawing figures in which:
Figure 1 is a cross-sectional view of a shroud assembly, showing a shroud segment surrounding the tip of a turbine blade, the shroud support, the shroud hanger;
Figure 2 is a perspective view of the turbine shroud of Figure 1;
Figure 3 is block diagram of a manufacturing process carried out in accordance with the present invention;
Figure 4 is a schematic side view of an injection molding apparatus;
Figure 5 is a schematic side view of a preform being removed from the mold shown in Figure 4;
Figure 6 is a schematic cross-sectional view of a preform inside a sintering chamber; and
Figure 7 is schematic perspective view of a puck being attached to a shroud segment.

### DETAILED DESCRIPTION OF THE INVENTION

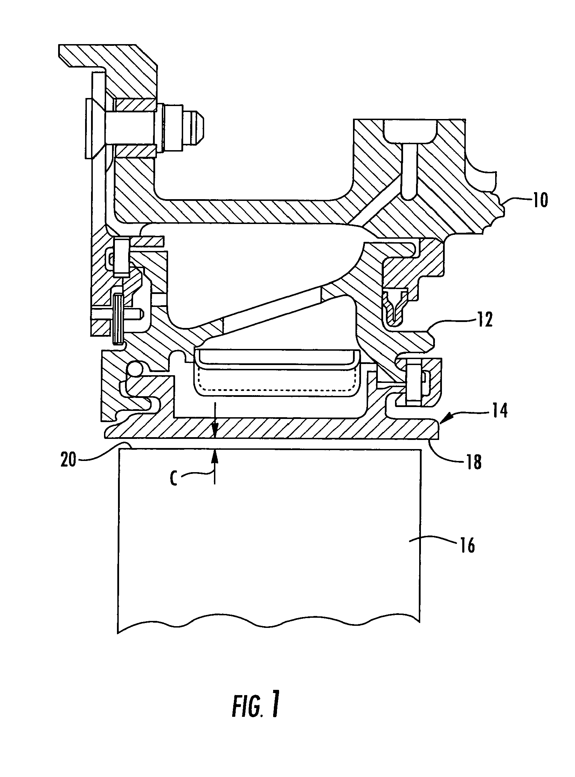

Referring to the drawings wherein identical reference numerals denote the same elements throughout the various views, Figure 1 illustrates in cross-section a portion of a high-pressure turbine (HPT) of a gas turbine engine, including a casing 10 and a shroud hanger 12 which supports a shroud segment 14. A plurality of the arcuate shroud segments 14 are arranged circumferentially in an annular array so as to closely surround the turbine blades 16 and thereby define the outer radial flowpath boundary for the hot combustion gases flowing through the turbine stage.

The shroud segments 14, or at least the flowpath surfaces 18 thereof, are comprised of a "rub-compliant material", in the sense that contact with the blade tip 20 will cause wear to the flowpath surface 18 rather than the blade 16. During engine operation, the clearance "C" between the blade 16 and flowpath surface 18 will gradually increase as the flowpath surface 18 wears away through blade rubs, mechanical erosion, oxidation, and corrosion.

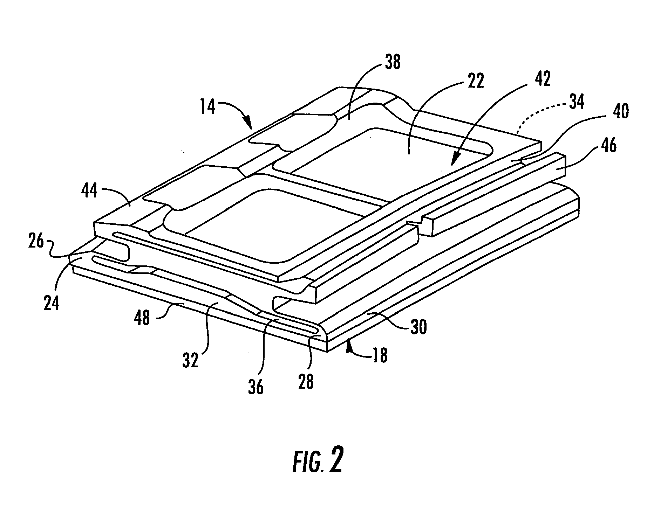

Figure 2 shows one of the shroud segments 14 in more detail. The shroud segment 14 is generally arcuate with a flowpath surface 18, an opposed interior surface 22, a forward flange 24 defining an axially-facing leading edge 26, an aft flange 28 defining an axially-facing trailing edge 30, and opposed left and right sidewalls 32 and 34. The sidewalls 32 and 34 may have seal slots 36 formed therein for receiving end seals of a known type (not shown) to prevent leakage between adjacent shroud segments 14. The shroud segment 14 includes an outwardly-extending forward wall 38 and an outwardly-extending aft wall 40. The forward wall 38, aft wall 40, sidewalls 32 and 34, and interior surface 22 cooperate to form an open shroud plenum 42. A forward mounting flange 44 extends from the forward wall 38, and an aft mounting flange 46 extends from the aft wall 40.

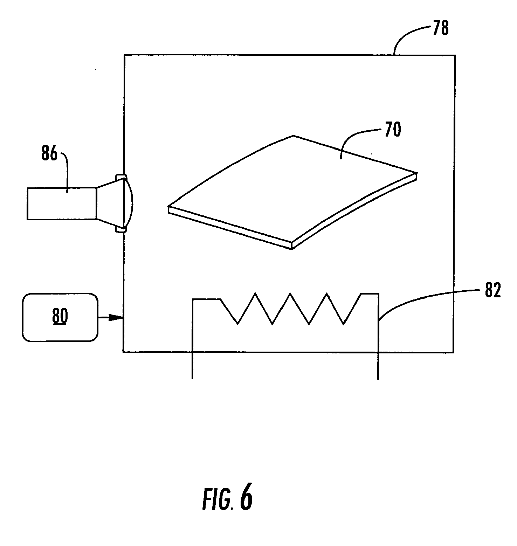

The shroud segment 14 may be formed as a one-piece casting of a suitable superalloy, such as a nickel-based superalloy, which has acceptable strength at the elevated temperatures of operation in a gas turbine engine. At least the flowpath surface 18 of the shroud segment 14 is formed by a sacrificial or rub-compliant material. When the shroud segment 14 is excessively worn, its flowpath surface 18 may be restored to the correct dimensions by attaching a pre-formed coating member or "puck" 48, shown in Figure 6, thereto.

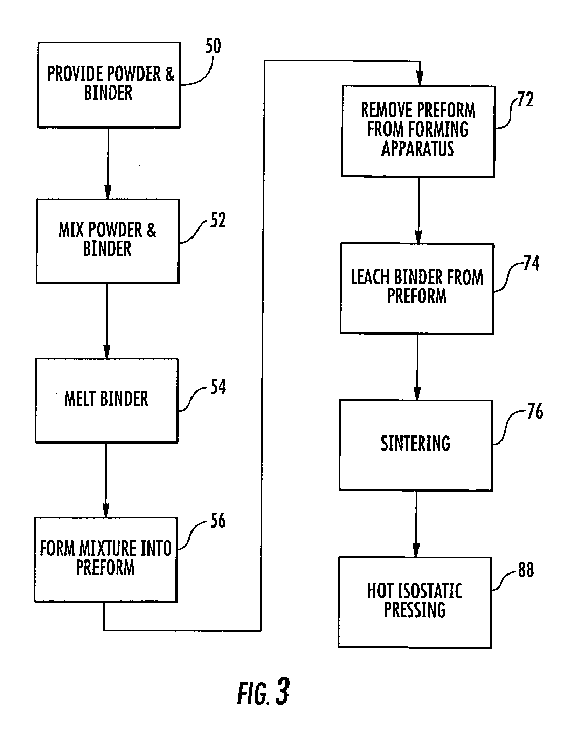

Figure 3 depicts the process for constructing the puck 48 according to the method of the present invention. Initially, as shown in block 50, a metallic powder and a suitable binder are provided. The metallic powder may be a single alloy or it may be a mechanical mixture of more than one alloy. For optimum performance in the injection molding process and also for compatibility with the optional microwave heating step described below, the particle size of the metallic powder should be about 100 micrometers or less.

An example of a known suitable metallic power is a combination of two nickel-based powders, where one of the powders contains a melting point depressant such as boron or silicon. Such compositions are described in U.S. Patent 5,561,827 issued to Reeves et al. and assigned to the assignee of the present invention. One suitable alloy for the high-melt powder is a superalloy composition known as Rene 195, described in U.S. Patent 6,565,680 issued to Jackson et al. and assigned to the assignee of the present invention. Rene 195 has a nominal composition, in weight percent, of up to about 5.1 wt % Co; about 7.2 to about 9.5 wt % Cr; about 7.4 to about 8.4 wt % Al; about 4.3 to about 5.6 wt % Ta; about 0.1 to about 0.5 wt % Si; about 0.1 to about 0.5 wt % Hf; up to about 0.05 wt % C; up to about 0.05 wt % B; about 0 to about 2.2 Re; about 2.7 to about 4.4 wt % W; and the balance Ni and typical impurities. In any case, the metallic powder must be suitable for the intended engine operating conditions and compatible with the base material of the shroud segment 14.

The binder may be any material which is chemically compatible with the metallic powder and which allows the required processing (e.g. mixing, injection, solidification, and leaching). Examples of known suitable binders include waxes and polymer resins. The binder may be provided in a powder form.

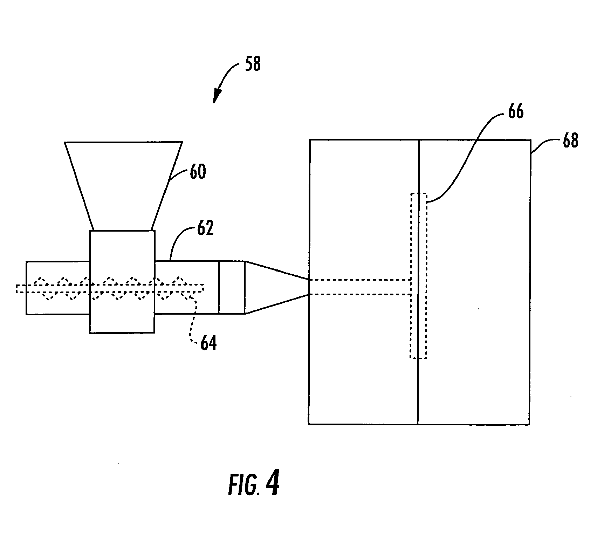

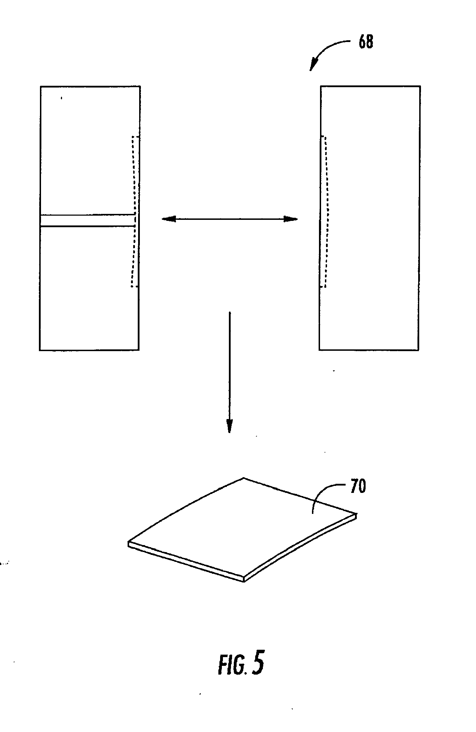

The binder and the metallic powder are thoroughly mixed together, as shown in block 52. The mixture is then heated to melt the binder and create a fluid with the metallic powder coated by the binder (block 54). Next, the mixture is formed into a predetermined shape at block 56. One way of forming the mixture is to use a known injection-molding apparatus. A schematic view of an injection molding apparatus 58 including a hopper 60 and an extruder 62 with rotating screw 64 is shown in Figure 4. The mixture is extruded into the cavity 66 of a mold 68. The mold 68 may optionally be heated to avoid excessively rapid solidification of the binder which would result in a brittle preform 70. Instead of melting the binder in a discrete batch, the mixture could be molded in a continuous manner using known injection molding equipment capable of melting the binder as it passes through the screw 64. Once the mixture has solidified, the mold 68 is opened as shown in Figure 5 and the resulting uncompacted or "green" preform 70 is removed (see block 72 in Figure 3).

The preform 70 comprises metal particles suspended in the solidified binder. The preform 70 is not suitable for use as a finished component, but merely has sufficient mechanical strength to undergo further processing. At block 74 of Figure 3, the preform 48 is leached to remove the majority of the binder. This may be done by submerging or washing the preform 48 with a suitable solvent which dissolves the binder but does not attack the metallic powder.

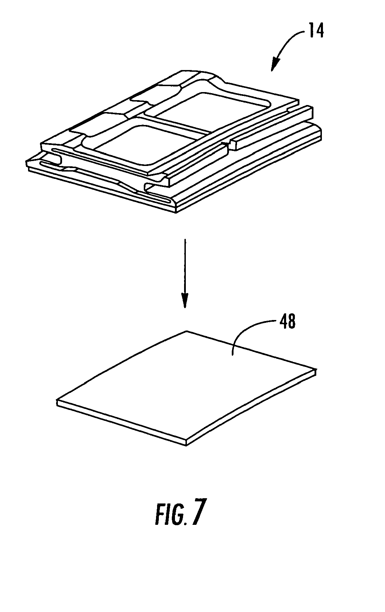

Next, at block 76, the preform 70 is sintered. As shown in Figure 6, the preform 70 is placed in a chamber 78 which includes means for creating a suitable atmosphere to prevent undesired oxidation of the preform 70 or other reactions during the sintering process. In the illustrated example a supply 80 of inert gas such as argon is connected to the interior of the chamber 78. The sintering could also be performed under a vacuum. The preform 70 is heated in a known manner, for example with a resistance heater 82, to a temperature below the liquidus temperature of the metallic powder and high enough to cause the metallic powder particles to fuse together and consolidate. The high temperature also evaporates and drives out any remaining binder. The preform 70 is held at the desired temperature for a selected time period long enough to result in a consolidated puck 48 (see Figure 7).

Alternatively, the preform 70 may be microwave sintered. To accomplish this, an optional microwave source 86 such as a known type of cavity magnetron with an output in the microwave frequency range would be mounted in communication with the chamber 78. The microwave spectrum covers a range of about 1 GHz to 300 GHz. Within this spectrum, an output frequency of about 2.4 GHz is known to couple with and heat metallic particles without passing through solid metals.

When the sintering cycle is complete, the puck 48 is removed from the chamber 78 and allowed to cool. When required, the puck 48 may be subjected to further consolidation using a known hot isostatic pressing ("HIP") process to result in a substantially 100% dense component, as noted in block 88 of Figure 3. The finished puck 48 has a mildly curved shape that conforms to that of the flowpath surface 18 and in the illustrated example has a thickness of up to about 2.5 mm (0.1 in.)

The puck 48 may be used for repairing or upgrading turbine shroud segments 14 as follows. First, the shroud segment 14 is cleaned and degreased. The shroud segment 14 is then ground or grit-blasted to remove any tightly adhering oxides. Next the shroud segment 14 is acid stripped and fluoride-ion cleaned in a known manner. The puck 48 is then joined to the flowpath surface 18 preferably by an adhesive. Adhesives such as Borden's SAF-T have been found suitable. Other joining procedures, such as spot welding of the puck 48, could also be used.

The puck 48 and shroud segment 14 are heated to a selected brazing temperature under a vacuum or other suitable environment and held there for a selected time, in accordance with prior art methods. During brazing, the puck 48 bonds to the flowpath surface 18. The shroud segment 14 with the puck 48 brazed thereto is nearly of the correct size to achieve the desired close tolerances between the extended length of the turbine blade 16 and the flowpath surface 18. Typically, however, some final machining is required so that the flow path of the shroud has the correct dimensions. Because of the increased density of the puck 48 relative to the prior art, it will create much less of a cupping effect on the shroud segment 14, and will have much less braze material runoff. This will avoid subsequent rework and the use of expensive braze "stop-off" materials.

The foregoing has described a method of manufacturing a coating member and repairing a shroud using a coating member. While specific embodiments of the present invention have been described, it will be apparent to those skilled in the art that various modifications thereto can be made without departing from the spirit and scope of the invention. Accordingly, the foregoing description of the preferred embodiment of the invention and the best mode for practicing the invention are provided for the purpose of illustration only and not for the purpose of limitation, the invention being defined by the claims.

**PARTS LISTS**

| | |
|---|---|
| 10 | Casing |
| 12 | Shroud hanger |
| 14 | Shroud segment |
| 16 | Turbine blades |
| 18 | Flowpath surfaces |
| 20 | Blade tip |
| 22 | Interior surface |
| 24 | Forward flange |
| 26 | Leading edge |
| 28 | Aft flange |
| 30 | Trailing edge |
| 32 | Opposed left sidewall |
| 34 | Opposed right sidewall |
| 36 | Seal slot |
| 38 | Forward wall |
| 40 | Aft wall |
| 42 | Shroud plenum |
| 44 | Forward mounting flange |
| 46 | Aft mounting flange |
| 48 | Puck |
| 50 | Block |
| 52 | Block |
| 54 | Binder |
| 56 | Block |
| 58 | Molding apparatus |
| 60 | Hopper |
| 62 | Extruder |
| 64 | Screw |
| 66 | Cavity |
| 68 | Mold |
| 70 | Brittle preform |
| 74 | Block |
| 76 | Block |
| 78 | Chamber |
| 80 | Supply |
| 82 | Heater |
| 86 | Microwave source |
| 88 | Block |

## Claims

1. A method of producing a puck (48) for coating a turbine shroud, comprising:
providing a mixture of a metallic powder and a binder;
melting said binder and forming said mixture into a preform (70) having a preselected shape conforming to a flowpath surface (18) of said shroud;
removing a majority of said binder from said preform (70); and
heating said preform (70) to remove the remainder of said binder and to sinter said metal powder together to form said puck (48).

2. The method of claim 1 further comprising preforming a hot isostatic pressing treatment on said puck (48) after said heating step.

3. The method of claim 1 wherein the step of forming said mixture into a preform (70) comprises injecting said mixture into a mold (68) having a desired shape.

4. The method of claim 1 wherein said preform (70) is maintained under a vacuum during said heating.

5. The method of claim 10 wherein said metallic powder is a combination of first and second powders, and said first powder consists essentially of: about 7.4 to about 8.4 wt % Al; about 4.3 to about 5.6 wt % Ta; about 0.1 to about 0.5 wt % Si; about 0.1 to about 0.5 wt % Hf; up to about 0.05 wt % C; up to about 0.05 wt % B; about 0 to about 2.2 Re; about 2.7 to about 4.4 wt % W; and balance Ni and typical impurities.

6. A method of repairing a turbine shroud, comprising:
providing a turbine shroud having a flowpath surface (18);
providing a mixture of a metallic powder and a binder;
melting said binder and forming said mixture into a preform (70) having a preselected shape conforming to a flowpath surface (18) of said shroud;
remove a majority of said binder from said preform (70);
heating said preform (70) to remove the remainder of said binder (54) and to sinter said metal powder together into a puck (48); and
bonding said preform (70) to said flowpath surface (18).

7. The method of claim 6 further comprising preforming a hot isostatic pressing treatment on said puck (48) after said heating step.

8. The method of claim 6 wherein the step of forming said mixture into a preform (70) comprises injecting said mixture into a mold (68) having a desired shape.

9. The method of claim 6 wherein said preform (70) is maintained under a vacuum during said heating.

10. The method of claim 6 wherein said metallic powder is a mixture of first and second powders, and one of said powders consists essentially of: about 7.4 to about 8.4 wt % Al; about 4.3 to about 5.6 wt % Ta; about 0.1 to about 0.5 wt % Si; about 0.1 to about 0.5 wt % Hf; up to about 0.05 wt % C; up to about 0.05 wt % B; about 0 to about 2.2 Re; about 2.7 to about 4.4 wt % W; and balance Ni and typical impurities.
